# EUROPEAN PATENT APPLICATION

(11) **EP 3 533 828 A1**
(43) Date of publication of application: **04.09.2019**
(21) Application number: 17865638.5
(22) Date of filing: 11.10.2017
(51) Int. Cl.: C08L 21/00, B60C 1/00, C08K 3/04, C08K 3/36, C08K 5/17, C08L 9/06

(54) **TIRE RUBBER COMPOSITION AND PNEUMATIC TIRE**

(30) Priority: 27.10.2016 JP 2016210563
(71) Applicant: Sumitomo Rubber Industries, Ltd., Kobe-shi, Hyogo 651-0072 (JP)
(72) Inventor: YAMADA, Hiroaki, Kobe-shi Hyogo 651-0072 (JP); YOSHIYASU, Hayato, Kobe-shi Hyogo 651-0072 (JP)
(74) Representative: TBK
(86) International application number: PCT/JP2017/036758
(87) International publication number: WO 2018/079258

(57) **Abstract**

Provided are a rubber composition for tires that provides improved silica dispersion and fuel economy while maintaining good hardness, and a pneumatic tire including the rubber composition. The present invention relates to a rubber composition for tires, containing: a rubber component; silica; and at least one silica dispersing agent selected from the group consisting of compounds represented by the following formula (I) and compounds represented by the following formula (II): 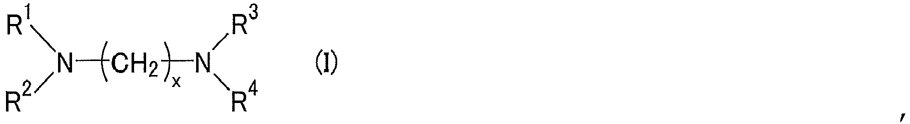 and

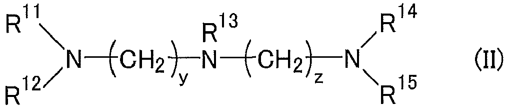

## Description

### TECHNICAL FIELD

The present invention relates to a rubber composition for tires, and a pneumatic tire including the rubber composition.

### BACKGROUND ART

Fuel consumption of vehicles has conventionally been reduced by lowering the rolling resistance of tires (or improving their rolling resistance properties). However, as the demand for fuel efficient vehicles has been increasing in recent years, it is desirable for rubber compositions for producing treads, which occupy a large proportion of the tire volume among the tire components, to have excellent low heat build-up properties (excellent fuel economy).

It is known to reduce the amount of reinforcing fillers in a rubber composition in order to provide satisfactory low heat build-up properties. This technique, however, causes the rubber composition to have a reduced hardness, thereby disadvantageously resulting in tire softening and thus decreases in vehicle handling (handling stability), wet grip performance, and abrasion resistance.

Patent Literature 1 discloses the incorporation of a polymer of a silane coupling agent to improve fuel economy. This technique still leaves room for improvement, and it is also desirable to develop other techniques.

### CITATION LIST

### PATENT LITERATURE

Patent Literature 1: JP 2012-52128 A

### SUMMARY OF INVENTION

### TECHNICAL PROBLEM

The present invention aims to solve the problems and provide a rubber composition for tires that provides improved silica dispersion and fuel economy while maintaining good hardness, and a pneumatic tire including the rubber composition.

### SOLUTION TO PROBLEM

The present inventors have conducted extensive studies and found that by incorporating a specific compound, it is possible to improve silica dispersion and fuel economy while maintaining good hardness. This finding has led to the completion of the present invention. Specifically, the present invention relates to a rubber composition for tires, containing: a rubber component; silica; and at least one silica dispersing agent selected from the group consisting of compounds represented by the following formula (I) and compounds represented by the following formula (II): 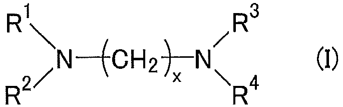 wherein R¹ represents a hydrocarbon group; R² to R⁴ are the same or different and each represent a hydrogen atom, a hydrocarbon group, or the group -(AO)ₙ-H wherein n represents an integer, and each n for R² to R⁴ may be the same or different; and x represents an integer, and 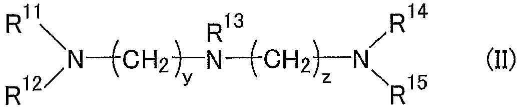 wherein R¹¹ represents a hydrocarbon group; R¹² to R¹⁵ are the same or different and each represent a hydrogen atom, a hydrocarbon group, or the group -(AO)ₙ-H wherein n represents an integer, and each n for R¹² to R¹⁵ may be the same or different; and y and z are the same or different and each represent an integer.

Preferably, the rubber component includes, based on 100% by mass thereof, 30 to 100% by mass of styrene butadiene rubber.

Preferably, the rubber composition contains the silica dispersing agent in an amount of 0.1 to 10.0 parts by mass per 100 parts by mass of the rubber component.

Preferably, the rubber composition contains the silica in an amount of 20 to 140 parts by mass per 100 parts by mass of the rubber component.

Preferably, the rubber composition has a combined amount of the silica and carbon black of 20 to 160 parts by mass per 100 parts by mass of the rubber component.

Preferably, the rubber composition for tires is for use as a rubber composition for treads.

The present invention also relates to a pneumatic tire, including a tire component including the rubber composition.

Preferably, the tire component is a tread.

### ADVANTAGEOUS EFFECTS OF INVENTION

The rubber composition for tires of the present invention contains a rubber component, silica, and at least one silica dispersing agent selected from the group consisting of compounds of formulas (I) and (II). Such a rubber composition provides improved silica dispersion and fuel economy while maintaining good hardness. Thus, by using the rubber composition in a tire component such as a tread, pneumatic tires excellent in the above-mentioned properties can be provided.

### DESCRIPTION OF EMBODIMENTS

The rubber composition for tires of the present invention contains a rubber component, silica, and at least one silica dispersing agent selected from the group consisting of compounds of formulas (I) and (II).

Inorganic fillers such as silica have high surface hydrophilicity and are disadvantageous in that they disperse poorly in rubber. The present invention involves the incorporation of a specific silica dispersing agent described herein together with silica to improve silica dispersion and fuel economy while maintaining good hardness. This is probably because the specific silica dispersing agent is a compound having both a secondary or higher amine (secondary amine or tertiary amine) group (i.e. -NR¹R² in formula (I) or -NR¹¹R¹² in formula (II)) and a primary to tertiary amine (primary amine, secondary amine, or tertiary amine) group (i.e. -NR³R⁴ in formula (I) or -NR¹⁴R¹⁵ in formula (II)), and these two specific amine groups present at both molecular ends of the compound can interact with silica, thereby improving silica dispersion. Further, when the specific silica dispersing agent has the group -(AO)ₙ-H bound to the nitrogen atom, it exhibits stronger interaction with silica so that the effects of the present invention can be more significantly achieved. This is probably due to the moderate hydrophilicity of the group -(AO)ₙ-H.

Moreover, the present invention makes it possible to maintain good hardness and thus to achieve good vehicle handling (handling stability), good wet grip performance, and good abrasion resistance.

Examples of rubber component species which may be used in the present invention include natural rubber (NR), polybutadiene rubber (BR), styrene butadiene rubber (SBR), styrene isoprene butadiene rubber (SIBR), ethylene propylene diene rubber (EPDM), chloroprene rubber (CR), and acrylonitrile butadiene rubber (NBR). The rubber component may include a single rubber component species or a combination of two or more rubber component species. To more suitably achieve the effects of the present invention, SBR and/or BR is preferred among these, with a combination of SBR and BR being more preferred.

Non-limiting examples of the SBR include emulsion-polymerized styrene butadiene rubber (E-SBR) and solution-polymerized styrene butadiene rubber (S-SBR).

The SBR preferably has a styrene content of 15% by mass or higher, more preferably 20% by mass or higher. The styrene content of the SBR is also preferably 50% by mass or lower. When the rubber composition contains a SBR having a styrene content falling within the range indicated above, the effects of the present invention can be more suitably achieved.

The styrene content may be determined by ¹H-NMR.

When the rubber composition contains SBR, the amount thereof based on 100% by mass of the rubber component is preferably 30% by mass or more, more preferably 40% by mass or more, still more preferably 60% by mass or more. The amount of the SBR may be 100% by mass and is preferably 95% by mass or less, more preferably 90% by mass or less. When the amount of the SBR falls within the range indicated above, the effects of the present invention can be more suitably achieved.

The SBR may be a product manufactured or sold by, for example, JSR Corporation, Sumitomo Chemical Co., Ltd., Asahi Kasei Chemicals Corporation, Zeon Corporation, Lanxess, or Trinseo.

Non-limiting examples of the BR include high-cis BR such as BR 1220 available from Zeon Corporation, BR130B and BR150B both available from Ube Industries, Ltd. and BR730 available from JSR Corporation, and BR containing syndiotactic polybutadiene crystals such as VCR412 and VCR617 both available from Ube Industries, Ltd. In particular, the BR preferably has a cis content of 90% by mass or higher to more suitably achieve the effects of the present invention.

When the rubber composition contains BR, the amount thereof based on 100% by mass of the rubber component is preferably 5% by mass or more, more preferably 10% by mass or more. The amount of the BR is preferably 60% by mass or less, more preferably 40% by mass or less. When the amount of the BR falls within the range indicated above, the effects of the present invention can be more suitably achieved.

The combined amount of the SBR and BR based on 100% by mass of the rubber component is preferably 60% by mass or more, more preferably 80% by mass or more, and may be 100% by mass. When the combined amount of the SBR and BR falls within the range indicated above, the effects of the present invention can be more suitably achieved.

The present invention involves the use of at least one silica dispersing agent selected from the group consisting of compounds represented by the following formula (I) and compounds represented by the following formula (II). By incorporating silica together with the specific silica dispersing agent described herein, it is possible to improve silica dispersion and fuel economy while maintaining good hardness. The silica dispersing agent may be a single silica dispersing agent or a combination of two or more silica dispersing agents. 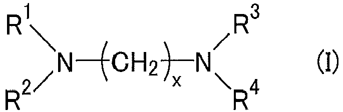 In formula (I), R¹ represents a hydrocarbon group; R² to R⁴ are the same or different and each represent a hydrogen atom, a hydrocarbon group, or the group -(AO)ₙ-H wherein n represents an integer, and each n for R² to R⁴ may be the same or different; and x represents an integer. 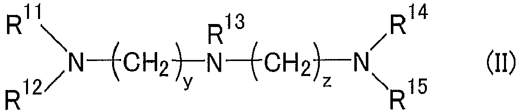 In formula (II), R¹¹ represents a hydrocarbon group; R¹² to R¹⁵ are the same or different and each represent a hydrogen atom, a hydrocarbon group, or the group -(AO)ₙ-H wherein n represents an integer, and each n for R¹² to R¹⁵ may be the same or different; and y and z are the same or different and each represent an integer.

Examples of the hydrocarbon groups for R¹ to R⁴ and R¹¹ to R¹⁵ include linear, branched, or cyclic aliphatic, alicyclic, or aromatic hydrocarbon groups, with aliphatic hydrocarbon groups being preferred among these. The number of carbon atoms of the hydrocarbon groups is preferably 1 to 30, more preferably 5 to 25, still more preferably 8 to 22, particularly preferably 12 to 20.

Examples of the aliphatic hydrocarbon groups include alkyl, alkylene, alkenyl, alkenylene, alkynyl, and alkynylene groups. Preferred among these, alkyl groups having the specified number of carbon atoms are preferred. Examples of the alkyl groups include methyl, ethyl, n-propyl, isopropyl, n-butyl, isobutyl, sec-butyl, tert-butyl, pentyl, hexyl, heptyl, 2-ethylhexyl, octyl, nonyl, decyl, undecyl, dodecyl, tridecyl, tetradecyl, pentadecyl, and octadecyl groups.

C3-C8 alicyclic hydrocarbon groups are preferred, and specific examples include cyclopropyl, cyclobutyl, cyclopentyl, cyclohexyl, cycloheptyl, cyclooctyl, cyclopropenyl, cyclobutenyl, cyclopentenyl, cyclohexenyl, cycloheptenyl, and cyclooctenyl groups.

C6-C10 aromatic hydrocarbon groups are preferred, and specific examples include phenyl, benzyl, phenethyl, tolyl, xylyl, and naphthyl groups. The tolyl or xylyl group may have a methyl substituent(s) at any of the ortho, meta, and para positions of the benzene ring.

Each AO in the group -(AO)ₙ-H for R² to R⁴ or for R¹² to R¹⁵ (wherein n represents an integer, and each n for R² to R⁴ or for R¹² to R¹⁵ may be the same or different) is the same or different and represents a C1-C6, preferably C2-C4, more preferably C2-C3 oxyalkylene group. Thus, the AO is more preferably a C2-C3 oxyalkylene group (oxyethylene (EO) or oxypropylene (PO)). When (AO)ₙ includes two or more types of oxyalkylene groups, the oxyalkylene groups may be arranged blockwise or randomly.

The symbol n represents the number of moles of AO added and is preferably 1 to 20, more preferably 1 to 16, still more preferably 1 to 15, particularly preferably 1 to 10, most preferably 1 to 5.

The AO groups preferably consist of an oxyethylene group (EO) and/or an oxypropylene group (PO). In particular, the group -(AO)ₙ-H is preferably -(EO)ₙ-H, -(PO)ₙ-H, -(EO)ₐ-(PO)_{b}-H, or -(PO)_{b}-(EO)ₐ-H. The group -(AO)ₙ-H is more preferably -(PO)ₙ-H, -(EO)ₐ-(PO)_{b}-H, or -(PO)_{b}-(EO)ₐ-H because the silica dispersing agent with an oxypropylene group (PO) which reduces adsorption to silica tends to show less inhibition of the reaction between silica and silane coupling agents, thereby resulting in better fuel economy. The group is still more preferably -(PO)ₙ-H or -(EO)ₐ-(PO)_{b}-H in which an oxypropylene group (PO) is present near the molecular end of the silica dispersing agent, particularly preferably -(EO)ₐ-(PO)_{b}-H.

The symbols a and b represent the number of moles of EO added and the number of moles of PO added, respectively. They satisfy the relationship: n = a + b.

The symbols a and b are each preferably 1 to 16, more preferably 1 to 10, still more preferably 1 to 5. The lower limit of b is particularly preferably 2.

The symbol x is preferably 1 to 10, more preferably 1 to 7, still more preferably 2 to 5, particularly preferably 3.

The symbols y and z are each preferably 1 to 10, more preferably 1 to 7, still more preferably 2 to 5, particularly preferably 3.

In formula (I), preferably at least one of R² to R⁴ is the group -(AO)ₙ-H, more preferably at least two of R² to R⁴ are -(AO)ₙ-H, and still more preferably all of R² to R⁴ are -(AO)ₙ-H.

Thus, further preferred compounds of formula (I) include compounds represented by the following formula (I-1): 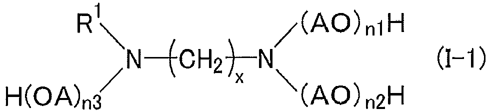 wherein n1, n2, and n3 each represent an integer (an integer as defined above for n), and the other symbols are as defined above formula (I).

In formula (I) or formula (I-1), the total number of moles of AO added (n1 + n2 + n3) is preferably 1 to 60, more preferably 1 to 30, still more preferably 2 to 16, particularly preferably 3 to 15.

In formula (II), R¹³ is preferably a hydrogen atom. Preferably at least one of R¹², R¹⁴, and R¹⁵ is the group -(AO)ₙ-H, more preferably at least two of R¹², R¹⁴, and R¹⁵ are -(AO)ₙ-H, and still more preferably all of R¹², R¹⁴, and R¹⁵ are -(AO)ₙ-H.

In formula (II), the total number of moles of AO added is preferably 1 to 60, more preferably 1 to 30, still more preferably 2 to 16, particularly preferably 3 to 15.

To more suitably achieve the effects of the present invention, the silica dispersing agent is preferably a compound of formula (I), more preferably a compound of formula (I-1). In the compound of formula (I), preferably at least one of R² to R⁴ is a hydrogen atom, more preferably at least two of R² to R⁴ are hydrogen atoms, and still more preferably all of R² to R⁴ are hydrogen atoms.

Specific examples of the silica dispersing agent include LIPOMIN DA-T available from Lion Specialty Chemicals Co., Ltd. (formula (I) wherein R¹ = C14-C18 alkyl, R² to R⁴ = hydrogen, and x = 3), LIPOMIN DA-CD available from Lion Specialty Chemicals Co., Ltd. (formula (I) wherein R¹ = C10-C16 alkyl, R² to R⁴ = hydrogen, and x = 3), LIPOMIN DA-HT available from Lion Specialty Chemicals Co., Ltd. (formula (I) wherein R¹ = C14-C18 alkyl (hydrogenated tallow alkyl), R² to R⁴ = hydrogen, and x = 3), NISSANAMINE DT available from NOF Corporation (formula (I) wherein R¹ = C14-C18 alkyl, R² to R⁴ = hydrogen, and x = 3), NISSANAMINE DT-H available from NOF Corporation (formula (I) wherein R¹ = C14-C18 alkyl (hydrogenated tallow alkyl), R² to R⁴ = hydrogen, and x = 3), NISSANAMINE DOB-R available from NOF Corporation (formula (I) wherein R¹ = C18 alkyl, R² to R⁴ = hydrogen, and x = 3), NISSANAMINE DV flake available from NOF Corporation (formula (I) wherein R¹ = C22 alkyl, R² to R⁴ = hydrogen, and x = 3), Triameen T available from AkzoNobel (formula (II) wherein R¹¹ = C14-C18 alkyl, R¹² to R¹⁵ = hydrogen, y = 3, and z = 3), LIPONOL DA-T/13 available from Lion Specialty Chemicals Co., Ltd. (formula (I) wherein R¹ = C14-C18 alkyl, R² to R⁴ = -(EO)₁-H (total number of moles of AO added: 3, formula (I-1) wherein n1 = 1, n2 = 1, and n3 = 1), and x = 3), LIPONOL DA-HT/E13 available from Lion Specialty Chemicals Co., Ltd. (formula (I) wherein R¹ = C14-C18 alkyl (hydrogenated tallow alkyl), R² to R⁴ = -(EO)₁-H (total number of moles of AO added: 3, formula (I-1) wherein n1 = 1, n2 = 1, and n3 = 1), and x = 3), LIPONOL DA-T/E18 available from Lion Specialty Chemicals Co., Ltd. (formula (I) wherein R¹ = C14-C18 alkyl, R² to R⁴ = -(EO)ₙ-H (total number of moles of AO added: 8), and x = 3), LIPONOL DA-T/25 available from Lion Specialty Chemicals Co., Ltd. (formula (I) wherein R¹ = C14-C18 alkyl, R² to R⁴ = -(EO)ₙ-H (total number of moles of AO added: 15), and x = 3), NYMEEN DT-203 available from NOF Corporation (polyoxyethylene alkyl propylene diamine), NYMEEN DT-208 available from NOF Corporation (polyoxyethylene alkyl propylene diamine), LIPONOL DA-HT/E13-P13 available from Lion Specialty Chemicals Co., Ltd. (formula (I) wherein R¹ = C14-C18 alkyl (hydrogenated tallow alkyl), R² to R⁴ = -(EO)₁-(PO)₁-H (total number of moles of AO added: 6, formula (I-1) wherein n1 = 2, n2 = 2, and n3 = 2), and x = 3), LIPONOL DA-HT/E13-P16 available from Lion Specialty Chemicals Co., Ltd. (formula (I) wherein R¹ = C14-C18 alkyl (hydrogenated tallow alkyl), R² to R⁴ = -(EO)₁-(PO)₂-H (total number of moles of AO added: 9, formula (I-1) wherein n1 = 3, n2 = 3, and n3 = 3), and x = 3), LIPONOL DA-HT/P13-E13 available from Lion Specialty Chemicals Co. , Ltd. (formula (I) wherein R¹ = C14-C18 alkyl (hydrogenated tallow alkyl), R² to R⁴ = -(PO)₁-(EO)₁-H (total number of moles of AO added: 6, formula (I-1) wherein n1 = 2, n2 = 2, and n3 = 2), and x = 3), LIPONOL DA-T/E13-P16 available from Lion Specialty Chemicals Co., Ltd. (formula (I) wherein R¹ = C14-C18 alkyl, R² to R⁴ = -(EO)₁-(PO)₂-H (total number of moles of AO added: 9, formula (I-1) wherein n1 = 3, n2 = 3, and n3 = 3), and x = 3), LIPONOL DA-HT/P13 available from Lion Specialty Chemicals Co., Ltd. (formula (I) wherein R¹ = C14-C18 alkyl (hydrogenated tallow alkyl), R² to R⁴ = -(PO)₁-H (total number of moles of AO added: 3, formula (I-1) wherein n1 = 1, n2 = 1, and n3 = 1), and x = 3), LIPONOL DA-T/P13 available from Lion Specialty Chemicals Co., Ltd. (formula (I) wherein R¹ = C14-C18 alkyl, R² to R⁴ = -(PO)₁-H (total number of moles of AO added: 3, formula (I-1) wherein n1 = 1, n2 = 1, and n3 = 1), and x = 3), and LIPONOL DA-HT/P16 available from Lion Specialty Chemicals Co., Ltd. (formula (I) wherein R¹ = C14-C18 alkyl (hydrogenated tallow alkyl), R² to R⁴ = -(PO)ₙ-H (total number of moles of AO added: 6), and x = 3). These may be used alone or in combinations of two or more.

The silica dispersing agent may be any of the commercial products described above. Instead of using these or other commercial products, it may be prepared, for example, but not limited to, by reacting an alkylene oxide with a multivalent amine compound in the presence or absence of a catalyst.

The amount of the silica dispersing agent (when combining two or more silica dispersing agents, the combined amount thereof) is preferably 0.1 parts by mass or more, more preferably 0.5 parts by mass or more, still more preferably 1.0 part by mass or more, particularly preferably 2.0 parts by mass or more per 100 parts by mass of the rubber component. The amount is also preferably 10.0 parts by mass or less, more preferably 8.0 parts by mass or less, still more preferably 6.0 parts by mass or less per 100 parts by mass of the rubber component. When the amount of the silica dispersing agent falls within the range indicated above, the effects of the present invention can be more suitably achieved.

The present invention involves the use of silica. By incorporating silica together with the specific silica dispersing agent described herein, it is possible to improve silica dispersion and fuel economy while maintaining good hardness. Non-limiting examples of the silica include dry silica (anhydrous silica) and wet silica (hydrous silica) . Wet silica is preferred because it contains a large number of silanol groups.

The silica preferably has a nitrogen adsorption specific surface area (N₂SA) of 40 m²/g or more, more preferably 50 m²/g or more, still more preferably 100 m²/g or more, particularly preferably 150 m²/g or more. A N₂SA of 40 m²/g or more tends to lead to good hardness. The N₂SA of the silica is also preferably 250 m²/g or less, more preferably 220 m²/g or less, still more preferably 200 m²/g or less. A N₂SA of 250 m²/g or less tends to lead to good fuel economy and good processability.

The nitrogen adsorption specific surface area of the silica is determined by the BET method in accordance with ASTM D3037-81.

The amount of the silica per 100 parts by mass of the rubber component is preferably 20 parts by mass or more, more preferably 40 parts by mass or more, still more preferably 60 parts by mass or more. When the amount is 20 parts by mass or more, the added silica tends to have a sufficient effect (good hardness and improved fuel economy) . The amount of the silica is preferably 140 parts by mass or less, more preferably 120 parts by mass or less, still more preferably 100 parts by mass or less. When the amount is 140 parts by mass or less, the silica tends to disperse better in rubber, thereby resulting in good fuel economy and good rubber processability.

The rubber composition of the present invention preferably contains a silane coupling agent together with the silica. Examples of the silane coupling agent include sulfide silane coupling agents, mercapto silane coupling agents, vinyl silane coupling agents, amino silane coupling agents, glycidoxy silane coupling agents, nitro silane coupling agents, and chloro silane coupling agents. Among these, sulfide silane coupling agents are preferred in order to achieve the effects of the present invention well.

From the standpoint of achieving the effects of the present invention well, preferred sulfide silane coupling agents are bis(3-triethoxysilylpropyl)tetrasulfide, bis(2-triethoxysilylethyl)tetrasulfide, bis(3-triethoxysilylpropyl)disulfide, and bis(2-triethoxysilylethyl)disulfide, with bis(3-triethoxysilylpropyl)disulfide being more preferred.

The amount of the silane coupling agent per 100 parts by mass of the silica is preferably 1 part by mass or more, more preferably 3 parts by mass or more. The amount of the silane coupling agent is also preferably 20 parts by mass or less, more preferably 12 parts by mass or less. When the amount of the silane coupling agent falls within the range indicated above, better silica dispersion can be obtained, and the effects of the present invention can be more suitably achieved.

The rubber composition of the present invention preferably contains carbon black. This provides good reinforcement and good hardness.

Non-limiting examples of the carbon black include GPF, HAF, ISAF, and SAF.

The carbon black preferably has a nitrogen adsorption specific surface area (N₂SA) of 30 m²/g or more, more preferably 60 m²/g or more. A N₂SA of 30 m²/g or more tends to lead to sufficient reinforcement and good hardness. The N₂SA of the carbon black is also preferably 250 m²/g or less, more preferably 150 m²/g or less, still more preferably 100 m²/g or less. A N₂SA of 250 m²/g or less tends to lead to good processability and good fuel economy.

The nitrogen adsorption specific surface area of the carbon black is measured in accordance with JIS K6217-2:2001.

The carbon black preferably has a dibutyl phthalate (DBP) oil absorption of 70 ml/100 g or more, more preferably 90 ml/100 g or more. The DBP oil absorption of the carbon black is also preferably 160 ml/100 g or less, more preferably 120 ml/100 g or less. When the DBP oil absorption falls within the range indicated above, the effects of the present invention can be more suitably achieved.

The DBP oil absorption of the carbon black is measured in accordance with JIS K6217-4:2001.

When the rubber composition of the present invention contains carbon black, the amount thereof per 100 parts by mass of the rubber component is preferably 1 part by mass or more, more preferably 3 parts by mass or more. The amount of the carbon black is also preferably 50 parts by mass or less, more preferably 20 parts by mass or less, still more preferably 10 parts by mass or less. When the amount of the carbon black falls within the range indicated above, the effects of the present invention can be more suitably achieved.

The combined amount of the silica and carbon black per 100 parts by mass of the rubber component is preferably 20 parts by mass or more, more preferably 50 parts by mass or more, still more preferably 70 parts by mass or more. The combined amount is also preferably 160 parts by mass or less, more preferably 140 parts by mass or less, still more preferably 120 parts by mass or less, particularly preferably 110 parts by mass or less. When the combined amount of the silica and carbon black falls within the range indicated above, the effects of the present invention can be more suitably achieved.

In addition to the above-described components, the rubber composition of the present invention may contain compounding agents conventionally used in the tire industry. Examples include reinforcing fillers such as clay, various softeners, various antioxidants, waxes, stearic acid, zinc oxide, vulcanizing agents such as sulfur, and various vulcanization accelerators.

Examples of the vulcanization accelerators include sulfenamide, thiazole, thiuram, thiourea, guanidine, dithiocarbamate, aldehyde-amine or aldehyde-ammonia, imidazoline, and xanthate vulcanization accelerators. Among these, sulfenamide vulcanization accelerators are preferred in order to achieve the effects of the present invention well.

Examples of the sulfenamide vulcanization accelerators include N-tert-butyl-2-benzothiazolylsulfenamide (TBBS), N-cyclohexyl-2-benzothiazolylsulfenamide (CBS), and N,N'-dicyclohexyl-2-benzothiazolylsulfenamide (DZ). Among these, CBS is preferred in order to achieve the effects of the present invention well. It is more preferred to combine CBS with N,N'-diphenylguanidine.

The rubber composition of the present invention may be prepared by known methods, such as by kneading the components using a rubber kneading machine such as an open roll mill or a Banbury mixer, and vulcanizing the kneaded mixture.

The rubber composition of the present invention is suitable for use in tire components, particularly in treads (cap treads).

The pneumatic tire of the present invention may be prepared from the rubber composition by usual methods. Specifically, the unvulcanized rubber composition containing various additives as needed may be extruded into the shape of a tire component (in particular, a tread (cap tread)), formed on a tire building machine in a usual manner and assembled with other tire components to build an unvulcanized tire, which may then be heated and pressurized in a vulcanizer to produce a tire.

The pneumatic tire of the present invention is suitable for, for example, passenger vehicles, trucks and buses, two-wheeled vehicles, or racing vehicles. In particular, it is more suitable as a tire for passenger vehicles.

### EXAMPLES

The present invention is specifically described with reference to, but not limited to, examples.

The chemicals used in the examples and comparative examples are listed below.

SBR: a commercial product available from Zeon Corporation (S-SBR, styrene content: 41% by mass)
BR: a commercial product available from JSR Corporation (cis content: 95% by mass)
Carbon black: SHOBLACK N330 available from Cabot Japan K.K. (N₂SA: 75 m²/g, DBP oil absorption: 102 ml/100 g)
Silica: ULTRASIL VN3 available from Evonik Degussa (N₂SA: 175 m²/g)
Silane coupling agent: Si266 available from Evonik Degussa (bis(3-triethoxysilylpropyl)disulfide)
Compound A: LIPONOL DA-T/13 (a compound of formula (I) (formula (I-1))
Compound B: LIPONOL DA-T/25 (a compound of formula (I) (formula (I-1))
   PEG 4000: PEG#4000 available from NOF Corporation (polyethylene glycol, weight average molecular weight: 4000) (HO(CH₂CH₂O)ₚH wherein p = about 90)
Compound C: LIPOMIN DA-CD (a compound of formula (I))
Compound D: LIPOMIN DA-T (a compound of formula (I))
Compound E: LIPONOL DA-T/E13-P16 (a compound of formula (I) (formula (I-1))
Compound F: LIPONOL DA-HT/E13-P13 (a compound of formula (I) (formula (I-1))
Compound G: LIPONOL DA-HT/E13-P16 (a compound of formula (I) (formula (I-1))
Compound H: LIPONOL DA-HT/P13-E13 (a compound of formula (I) (formula (I-1))
Compound I: LIPONOL DA-HT/P16 (a compound of formula (I)) Wax: Ozoace wax available from Nippon Seiro Co., Ltd.
Oil: process oil PW-32 available from Idemitsu Kosan Co. , Ltd. (paraffinic process oil)
Antioxidant: NOCRAC 6C available from Ouchi Shinko Chemical Industrial Co., Ltd. (N-(1,3-dimethylbutyl)-N'-phenyl-p-phenylenediamine)
Stearic acid: stearic acid available from NOF Corporation
Sulfur: powdered sulfur available from Tsurumi Chemical Industry Co., Ltd.
Zinc oxide: Zinc oxide #1 available from Mitsui Mining & Smelting Co., Ltd.
Vulcanization accelerator 1: NOCCELER CZ available from Ouchi Shinko Chemical Industrial Co., Ltd. (N-cyclohexyl-2-benzothiazolylsulfenamide)
Vulcanization accelerator 2: NOCCELER D available from Ouchi Shinko Chemical Industrial Co., Ltd. (N,N'-diphenylguanidine)

### Examples and Comparative Examples

According to each of the formulations shown in Tables 1 to 3, the chemicals other than the sulfur and vulcanization accelerators were kneaded in a Banbury mixer at 165°C for four minutes to give a kneaded mixture. Next, the kneaded mixture was kneaded with the sulfur and vulcanization accelerators at 80°C for four minutes using an open roll mill to obtain an unvulcanized rubber composition. Then, the unvulcanized rubber composition was press-vulcanized at 170°C for 20 minutes to obtain a vulcanized rubber composition.

The unvulcanized and vulcanized rubber compositions prepared as above were evaluated as described below. Tables 1 to 3 show the results. The standard comparative examples in Tables 1, 2, and 3 are Comparative Examples 1, 4, and 5, respectively.

### (Silica dispersion index)

The G* of the vulcanized rubber compositions was measured at 100°C, 1 Hz, and strains of 0.5, 1, 2, 4, 8, 16, 32, and 64% using a RPA2000 tester available from Alpha Technologies. A difference between the maximum and minimum values of G* was calculated to determine the Payne effect of the silica. The results are expressed as an index, with the standard comparative example set equal to 100. This index is indicative of silica dispersion. A lower index means that silica is better dispersed, thus indicating better silica dispersion. An index of 90 or lower is considered good.

### (Fuel economy)

The tan δ of the vulcanized rubber compositions was measured at a dynamic strain amplitude of 1%, a frequency of 10 Hz, and a temperature of 50°C using a spectrometer available from Ueshima Seisakusho Co., Ltd. The tan δ values are expressed as an index, with the standard comparative example set equal to 100. A lower index indicates a smaller rolling resistance and thus better fuel economy. An index of 95 or lower is considered good.

### (Hardness)

The hardness of the vulcanized rubber compositions was measured using a type A durometer in accordance with JIS K6253 "Rubber, vulcanized or thermoplastic -- Determination of hardness". The measurement was carried out at 25°C. The results are expressed as an index, with the standard comparative example set equal to 100. A higher index indicates a better hardness resulting in better vehicle handling (handling stability), wet grip performance, and abrasion resistance. An index of 90 or higher is considered good.

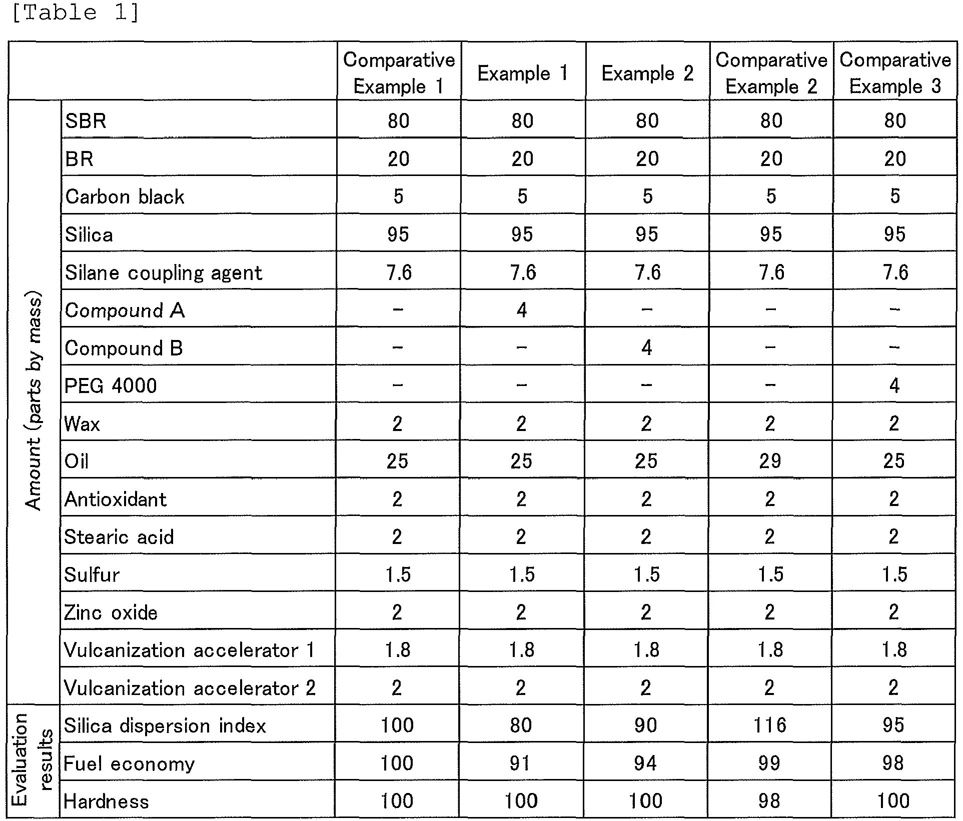

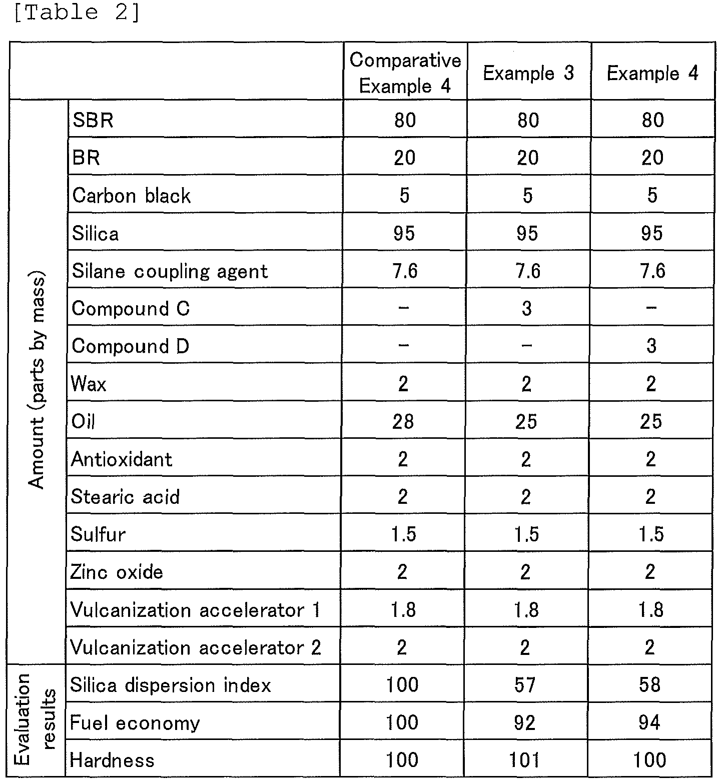

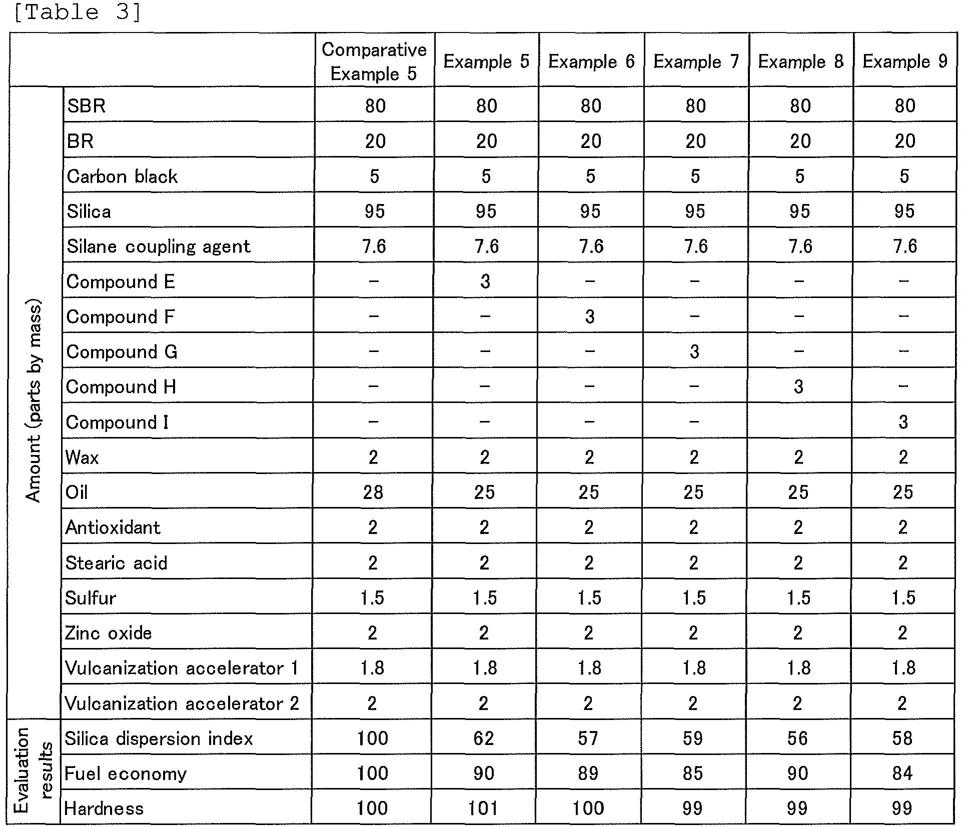

As shown in Tables 1 to 3, the rubber compositions of the examples containing a rubber component, silica, and at least one silica dispersing agent selected from the group consisting of compounds of formulas (I) and (II) exhibited improved silica dispersion and fuel economy while maintaining good hardness.

## Claims

1. A rubber composition for tires, comprising:
a rubber component;
silica; and
at least one silica dispersing agent selected from the group consisting of compounds represented by the following formula (I) and compounds represented by the following formula (II) : 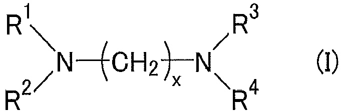 wherein R¹ represents a hydrocarbon group; R² to R⁴ are the same or different and each represent a hydrogen atom, a hydrocarbon group, or the group -(AO)ₙ-H wherein n represents an integer, and each n for R² to R⁴ may be the same or different; and x represents an integer, and 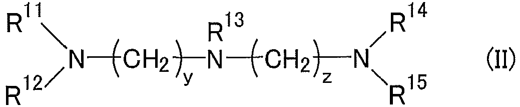 wherein R¹¹ represents a hydrocarbon group; R¹² to R¹⁵ are the same or different and each represent a hydrogen atom, a hydrocarbon group, or the group -(AO)ₙ-H wherein n represents an integer, and each n for R¹² to R¹⁵ may be the same or different; and y and z are the same or different and each represent an integer.

2. The rubber composition for tires according to claim 1,
wherein the rubber component comprises, based on 100% by mass thereof, 30 to 100% by mass of styrene butadiene rubber.

3. The rubber composition for tires according to claim 1 or 2,
wherein the rubber composition comprises the silica dispersing agent in an amount of 0.1 to 10.0 parts by mass per 100 parts by mass of the rubber component.

4. The rubber composition for tires according to any one of claims 1 to 3,
wherein the rubber composition comprises the silica in an amount of 20 to 140 parts by mass per 100 parts by mass of the rubber component.

5. The rubber composition for tires according to any one of claims 1 to 4,
wherein the rubber composition has a combined amount of the silica and carbon black of 20 to 160 parts by mass per 100 parts by mass of the rubber component.

6. The rubber composition for tires according to any one of claims 1 to 5, which is for use as a rubber composition for treads.

7. A pneumatic tire, comprising a tire component comprising the rubber composition according to any one of claims 1 to 6.

8. The pneumatic tire according to claim 7,
wherein the tire component is a tread.
